# FASCICULE DE BREVET EUROPEEN

(11) **EP 2 123 499 B1**
(45) Date de publication et mention de la délivrance du brevet: **10.02.2016**
(21) Numéro de dépôt: 09160315.9
(22) Date de dépôt: 14.05.2009
(51) Int. Cl.: G05G 1/38, G01D 3/08, F02D 41/14, F02D 11/10

(54) **Procédé de simulation d'un levier de commande émettant des signaux électriques**
Simulationsverfahren eines Steuerhebels, der elektrische Signale aussendet
Method for simulating a control lever emitting electrical signals

(30) Priorité: 23.05.2008 FR 0853372
(43) Date de publication de la demande: 25.11.2009
(73) Titulaire: Peugeot Citroën Automobiles SA, 78140 Vélizy-Villacoublay (FR)
(72) Inventeur: Malet, Claire, 78018, Paris (FR); Wilwert, Cédric, 75013, Paris (FR)

(56) Documents cités:
- EP-A- 1 114 982
- DE-A1- 19 642 174
- GB-A- 2 300 484
- US-A- 4 300 205
- US-A- 5 309 759
- US-A- 5 445 126
- ISMINI SCOURAS: 'Precision programmable resistor module offer high accuracy, stability', [en ligne] 05 Novembre 2007, XP055202854 Extrait de l'Internet: <URL:http://www.embedded.com/print/4099989> [extrait le 2015-07-16]

## Description

La présente invention concerne un procédé de simulation d'un levier de commande émettant des signaux électriques, notamment pour une pédale d'accélérateur pour moteur thermique de véhicule automobile.

Les véhicules automobiles comportent des actionneurs commandés par le conducteur, qui de plus en plus souvent envoient des signaux de commande sous forme électrique à des calculateurs qui pilotent des organes comme le moteur thermique. Ces signaux de commande représentant la demande du conducteur, sont directement interprétés par le calculateur pour agir sur les organes pilotés suivant cette demande. C'est notamment le cas pour la pédale d'accélérateur.

Un problème important est d'éviter un risque d'erreur provenant de signaux erronés reçus par le calculateur, suite à une défaillance, qui pourrait entraîner une accélération trop faible ou trop forte du moteur, avec éventuellement des risques concernant la sécurité.

Les causes de défaillance peuvent être multiples, provenant de la pédale elle même ou des liaisons électriques liées à cette pédale, et ayant pour origine par exemple un court-circuit ou un mauvais contact d'un connecteur.

Pour limiter les risques, on utilise une pédale d'accélérateur délivrant deux signaux électriques différents dépendant de son degré d'enfoncement, qui sont comparés par le calculateur de contrôle du moteur pour permettre d'enregistrer une défaillance venant de la commande, et de réagir en conséquence en tenant compte de la demande du conducteur pour réaliser un fonctionnement en mode dégradé du moteur assurant la sécurité.

Une pédale d'accélérateur de ce type est décrite dans le document FR-A1-2897447 présentant une pédale délivrant deux signaux électriques proportionnels qui sont dans un rapport de un à deux, avec une tension minimum dans le cas où la pédale est complètement relâchée.

Le document DE 196 42 174 décrit un levier de commande d'un véhicule automobile avec deux potentiomètres et avec deux signaux redondants indiquant le positionnement du levier de commande. Il est mentionné que les résistances internes du levier de commande peuvent être modifiées pour adapter le levier de commande pour une application particulière.

Pour une production industrielle en grande série, les composants produits comportent des dispersions de fabrication ce qui procure à chaque valeur de signal un intervalle de tolérance. Chaque signal doit être compris suivant le cahier des charges dans un intervalle limité par une valeur minimum et une valeur maximum, et le rapport entre ces deux signaux doit aussi rester dans un intervalle de tolérance, de manière à obtenir des produits standard et interchangeables.

Un problème qui se pose est que pour assurer la sécurité de fonctionnement du véhicule, il faut valider le fonctionnement du calculateur moteur avec les différentes pédales qui peuvent être produites, et notamment dans des pires cas où les signaux sont en limite de tolérance.

Or il est difficile et onéreux de réaliser certains cas de pédale suivant des limites particulières, qui peuvent même être parfois impossibles à fabriquer, ce qui complique la réalisation de ces tests.

La présente invention a notamment pour but d'éviter ces inconvénients de la technique antérieure, et de proposer un procédé de simulation d'une pédale d'accélérateur permettant de simuler une pédale comportant des valeurs particulières de signaux.

Elle propose à cet effet un procédé de simulation d'un levier de commande connecté à une alimentation électrique, et émettant des signaux électriques dépendant de son degré d'enfoncement, comprenant un signal haut et un autre signal bas, caractérisé en ce que pour simuler avec une position définie du levier une première valeur particulière du signal haut ou du signal bas, ainsi qu'une deuxième valeur particulière de la cohérence entre ces deux signaux, on réalise successivement les opérations suivantes:
- dans une première étape, on mesure les valeurs du signal haut et du signal bas ;
- dans une deuxième étape, on ajoute une première résistance en série sur une des trois connections suivantes, l'alimentation de la pédale, le signal haut ou le signal bas, pour obtenir une des deux valeurs particulières ; et
- dans une troisième étape, on mesure la deuxième valeur qui en résulte, et on ajuste une deuxième résistance en série sur une des deux connections restantes pour obtenir la deuxième valeur particulière souhaitée.

Un avantage essentiel du procédé de simulation selon l'invention, est qu'il permet facilement et de manière économique à partir d'un levier de commande délivrant des valeurs quelconques, de simuler un levier comportant deux valeurs particulières choisies librement dans les intervalles de tolérance, pour réaliser des essais avec ces valeurs.

Le procédé de simulation selon l'invention peut en outre comporter une ou plusieurs des caractéristiques suivantes, qui peuvent être combinées entre elles.

Selon une première variante, pour obtenir une valeur du signal haut en limite supérieure de tolérance, et une cohérence en limite supérieure de tolérance, on vérifie d'abord dans la première étape si le signal bas est supérieur ou inférieur à sa valeur particulière.

Avantageusement dans la deuxième étape, dans le cas où le signal bas est supérieur à sa valeur particulière, on ajoute une résistance en série sur l'alimentation du levier pour descendre ce signal bas à la valeur particulière demandée, et dans le cas où le signal bas est inférieur à sa valeur particulière, on ajoute une résistance en série sur le signal bas pour remonter ce signal bas à la valeur particulière demandée,

Avantageusement dans la troisième étape, on ajoute une résistance en série sur le signal haut pour remonter ce signal haut à la valeur particulière demandée.

Selon une deuxième variante, pour obtenir une valeur du signal bas en limite supérieure de tolérance, et une cohérence en limite inférieure de tolérance, on vérifie d'abord dans la première étape si le signal haut est supérieur ou inférieur à sa valeur particulière.

Avantageusement dans la deuxième étape, dans le cas où le signal haut est inférieur à sa valeur particulière, on ajoute une résistance en série sur le signal haut pour remonter ce signal haut à la valeur particulière demandée, et dans le cas où le signal haut est supérieur à sa valeur particulière, on ajoute une résistance en série sur l'alimentation du levier pour descendre ce signal haut à la valeur particulière demandée.

Avantageusement dans la troisième étape, on ajoute une résistance en série sur le signal bas pour remonter ce signal bas à la valeur particulière demandée.

Selon un mode de réalisation, le procédé de simulation est utilisé pour la simulation d'une pédale d'accélérateur de commande d'un moteur thermique.

Avantageusement, on utilise ce procédé pour simuler des valeurs particulières en position de pédale pied levé.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma d'une installation électrique de la pédale, suivant le procédé de simulation selon l'invention ;
- la figure 2 est diagramme présentant le procédé pour une simulation du pire cas de cohérence maximum ;
- les figures 3 et 4 sont des schémas montrant pour ce premier cas, des valeurs des deux signaux électriques ;
- la figure 5 est diagramme présentant le procédé pour une simulation du pire cas de cohérence minimum ; et
- les figures 6 et 7 sont des schémas montrant pour ce deuxième cas, des valeurs des deux signaux électriques.

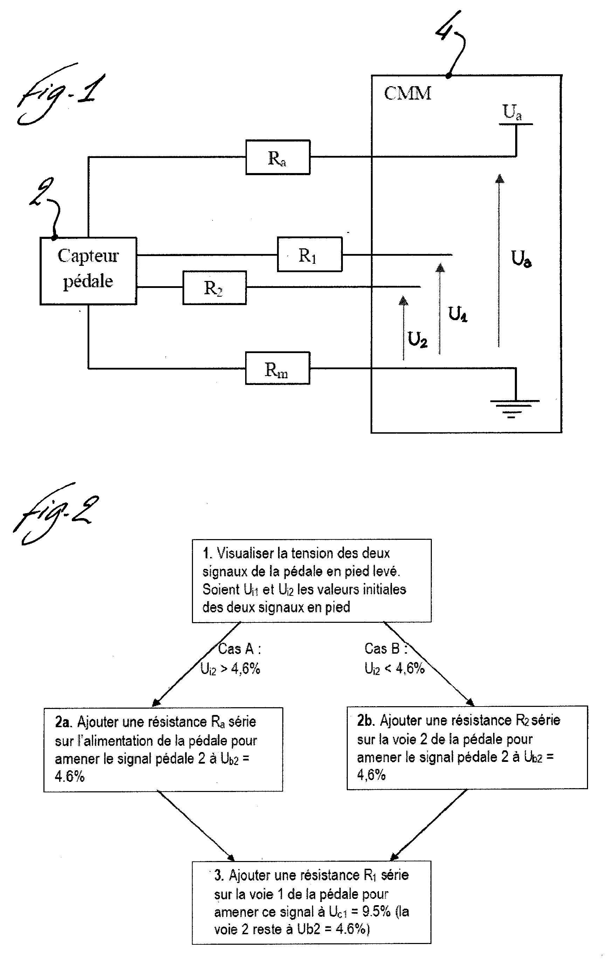

La figure 1 représente un capteur de pédale d'accélérateur 2, relié à un boîtier 4 comprenant une alimentation électrique délivrant une tension Ua par rapport à une masse, une résistance d'alimentation Ra étant interposée sur la ligne d'alimentation, ainsi qu'une résistance de masse Rm sur la ligne de masse.

Le boîtier 4 comprend aussi deux moyens de mesure des tensions des deux signaux délivrés par le capteur de pédale 2, mesurant une tension U1 délivrée par le signal haut, avec une résistance R1 interposée en série, et une tension U2 délivrée par le signal bas, avec aussi une résistance R2 interposée en série.

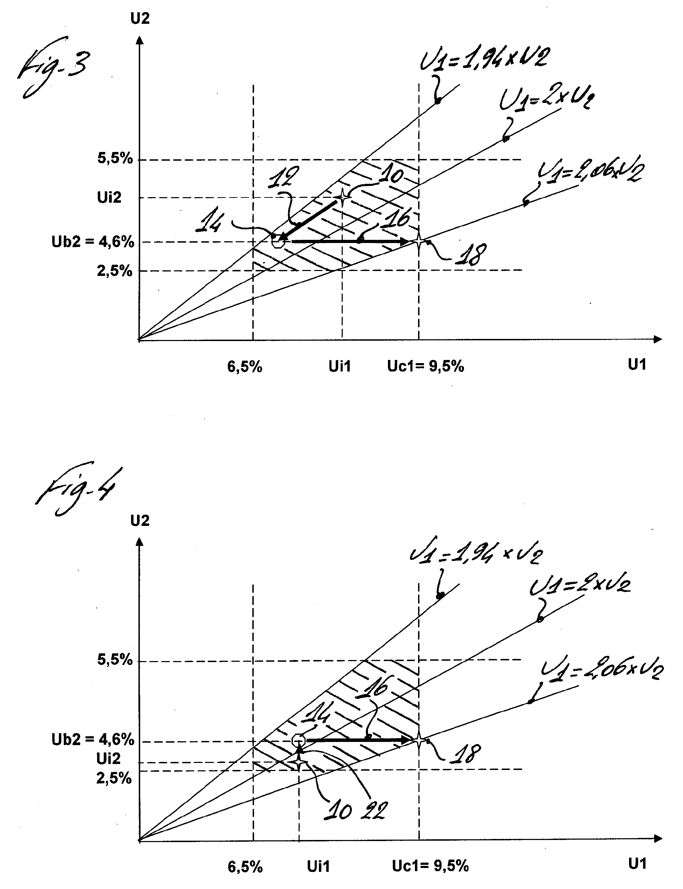

Les figures 3 et 4 présentent pour un type donné de pédale pour lequel on a les conditions suivantes au cahier des charges pour la position pied levé, les tensions étant données en pourcentage de la tension d'alimentation :
- 6,5% < U1 < 9,5%
- 2,5% < U2 < 5,5%

De plus, le rapport entre les deux signaux aux conditions nominales est U1 = 2 x U2. La limite de cohérence des signaux est :
- 1,94<U1 /U2<2,06

Ces limites définissent une zone qui est représentée en hachures.

La figure 2 présente un procédé de simulation d'une pédale représentant un pire cas de cohérence maximum, c'est-à-dire dans le cas où le signal haut est en limite supérieure de tolérance, soit :
- U1 = 9,5%
et la cohérence entre les deux voies est aussi en limite supérieure, soit :
- U1 / U2 = 2,06

Le procédé comporte les étapes suivantes. Dans l'étape 1, on mesure les tensions Ui1, Ui2 des deux signaux pour la position pied levé qui sont représentées par le point de mesure 10 dans les diagrammes, ainsi que la tension d'alimentation Ua.

On passe à l'étape 2a dans le cas où Ui2 > 4,6% (soit 9,5% / 2,06), présenté par le schéma de la figure 3. On ajoute une résistance Ra en série sur l'alimentation de la pédale 2, dont la valeur est ajustée pour ramener suivant la flèche 12 le point de mesure en position 14, avec la valeur du signal bas qui baisse et devient Ub2 = 4,6%.

Ou on passe à l'étape 2b dans le cas où Ui2 < 4,6%, présenté par le schéma de la figure 4. On ajoute une résistance R2 en série sur le signal bas délivré par la pédale 2, dont la valeur est ajustée pour ramener suivant la flèche 22 le point de mesure en position 14, avec la valeur du signal bas qui remonte et devient Ub2 = 4,6%.

Enfin pour les deux cas dans l'étape 3, on ajoute une résistance R1 en série sur le signal haut de la pédale 2, dont la valeur est ajustée pour ramener suivant la flèche 16 le point de mesure en position 18, avec la valeur du signal haut qui augmente et devient Uc1 = 9,5%.

On notera que pendant cette dernière étape, la valeur du signal bas Ub2 ne bouge pas et reste à 4,6%.

On réalise ainsi de manière simple et économique, à partir d'une pédale 2 comportant n'importe quelles valeurs de signaux dans les tolérances de fabrication, et de façon indépendante, un ajustement successif des deux valeurs souhaités pour le signal haut et la cohérence.

Cet ensemble formé par une pédale standard 2 et les résistances Ra, R1 et R2 dont les valeurs ont ainsi été définies, permet ensuite de réaliser des tests de fonctionnement du calculateur moteur pour ce cas particulier de pédale simulée, afin de valider la compatibilité de cette pédale particulière avec le calculateur.

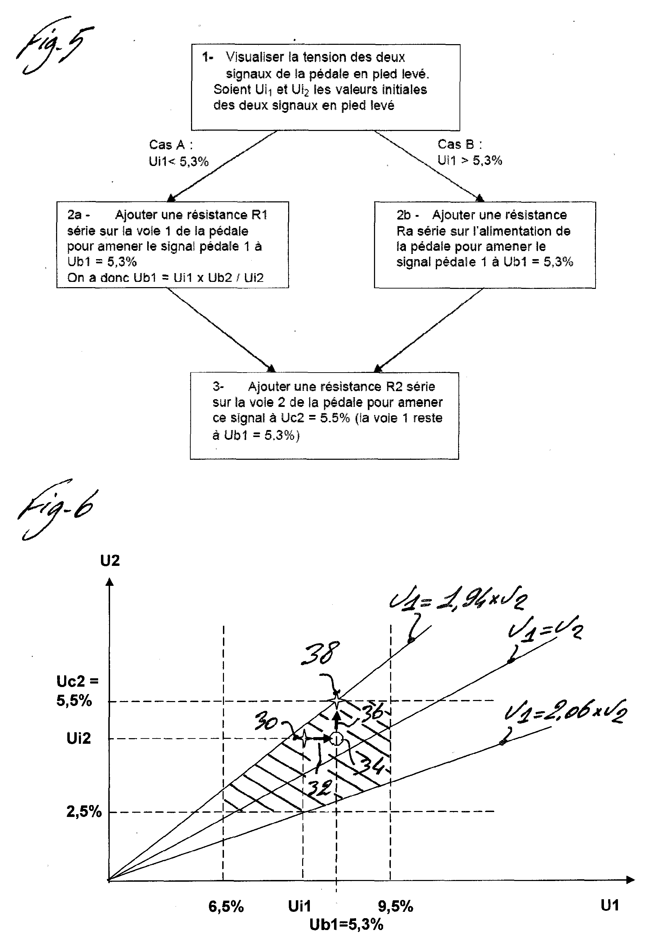

Les figures 5 à 7 présentent en variante, un procédé de simulation d'une pédale représentant un pire cas de cohérence minimum, c'est-à-dire dans le cas où le signal bas est en limite supérieure de tolérance, soit :
- U2 = 5,5%
et la cohérence entre les deux voies est en limite inférieure, soit :
- U1 / U2 = 1,94

Le procédé comporte les étapes suivantes. Dans l'étape 1, on mesure les tensions Ui1, Ui2 des deux signaux pour la position pied levé qui est représentée par le point de mesure 30 dans les diagrammes, ainsi que la tension d'alimentation Ua.

On passe à l'étape 2a dans le cas où Ui1 < 5,3%, présenté par le schéma de la figure 6. On ajoute une résistance R1 en série sur le signal haut délivré par la pédale, dont la valeur est ajustée pour ramener suivant la flèche 32 le point de mesure en position 34, avec la valeur du signal haut qui augmente et devient Ub1 = 5,3%.

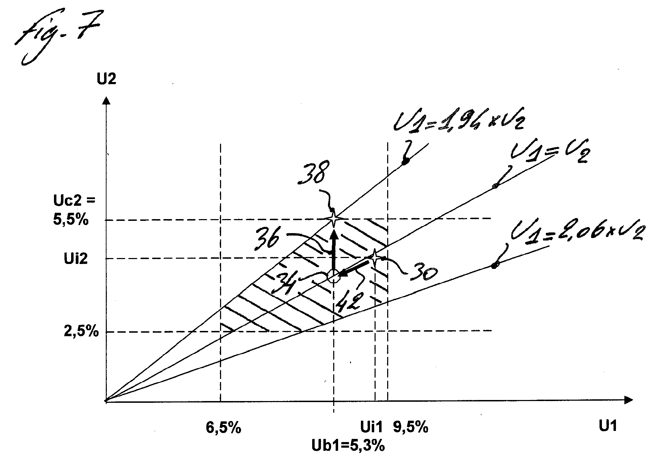

Ou on passe à l'étape 2b dans le cas où Ui1 > 5,3%, présenté par le schéma de la figure 7. On ajoute une résistance Ra sur l'alimentation de la pédale, dont la valeur est ajustée pour ramener suivant la flèche 42 le point de mesure en position 34, avec la valeur du signal haut qui descend et devient Ub1 = 5,3%.

Enfin pour les deux cas, on ajoute une résistance R2 en série sur le signal bas de la pédale, dont la valeur est ajustée pour ramener suivant la flèche 36 le point de mesure en position 38, avec la valeur du signal bas qui augmente et devient Uc2 = 5,5%.

On notera que pendant cette dernière étape, la valeur du signal haut Ub1 ne bouge pas et reste à 5,3%.

On a simulé ainsi une deuxième variante de pédale, comprenant d'autres conditions aux limites, à partir d'un procédé similaire.

On peut avec un tel procédé, réaliser tous les cas de figure souhaités, en utilisant seulement différentes résistances ou des résistances variables, et à partir de pédales prisent dans une production courante, pour réaliser différents tests sur une installation complète comprenant le calculateur moteur.

## Revendications

1. Procédé de simulation d'un levier de commande (2) d'un organe d'un véhicule, notamment d'un véhicule automobile, à partir d'un levier de commande standard, connecté à une alimentation électrique (4), et émettant des signaux électriques quelconques dépendant de son degré d'enfoncement, comprenant un signal haut (U1) et un autre signal bas (U2), dans lequel, pour simuler à partir d'une position définie du levier de commande standard, une première valeur particulière du signal haut (U1) ou du signal bas (U2), ainsi qu'une deuxième valeur particulière de la cohérence entre ces deux signaux (U1/U2), on réalise successivement les opérations suivantes :
- dans une première étape, on mesure les valeurs du signal haut (U1) et du signal bas (U2) ;
- dans une deuxième étape, on ajoute une première résistance en série sur une des trois connections suivantes, l'alimentation de la pédale (Ra), le signal haut (R1) ou le signal bas (R2), pour obtenir une des deux valeurs particulières ; et
- dans une troisième étape, on mesure la deuxième valeur qui en résulte, et on ajuste une deuxième résistance en série sur une des deux connections restantes pour obtenir la deuxième valeur particulière souhaitée.

2. Procédé de simulation selon la revendication 1, **caractérisé en ce que** pour obtenir une valeur du signal haut (U1) en limite supérieure de tolérance, et une cohérence (U1/U2) en limite supérieure de tolérance, on vérifie d'abord dans la première étape si le signal bas (Ui2) est supérieur ou inférieur à sa valeur particulière (Ub2).

3. Procédé de simulation selon la revendication 2, **caractérisé en ce que** dans la deuxième étape, dans le cas où le signal bas (Ui2) est supérieur à sa valeur particulière, on ajoute une résistance en série (Ra) sur l'alimentation du levier pour descendre ce signal bas à la valeur particulière demandée (Ub2), et dans le cas où le signal bas (Ui2) est inférieur à sa valeur particulière, on ajoute une résistance en série (R2) sur le signal bas pour remonter ce signal bas à la valeur particulière demandée (Ub2).

4. Procédé de simulation selon la revendication 3, **caractérisé en ce que** dans la troisième étape on ajoute une résistance en série (R1) sur le signal haut (U1) pour remonter ce signal haut à la valeur particulière demandée (Uc1).

5. Procédé de simulation selon la revendication 1, **caractérisé en ce que** pour obtenir une valeur du signal bas (U2) en limite supérieure de tolérance, et une cohérence (U1/U2) en limite inférieure de tolérance, on vérifie d'abord dans la première étape si le signal haut (Ui1) est supérieur ou inférieur à sa valeur particulière (Ub1).

6. Procédé de simulation selon la revendication 5, **caractérisé en ce que** dans la deuxième étape, dans le cas où le signal haut (Ui1) est inférieur à sa valeur particulière, on ajoute une résistance en série (R1) sur le signal haut pour remonter ce signal haut à la valeur particulière demandée (Ub1), et dans le cas où le signal haut (Ui1) est supérieur à sa valeur particulière, on ajoute une résistance en série (Ra) sur l'alimentation du levier pour descendre ce signal haut à la valeur particulière demandée (Ub1).

7. Procédé de simulation selon la revendication 6, **caractérisé en ce que** dans la troisième étape on ajoute une résistance en série (R2) sur le signal bas (U2) pour remonter ce signal bas à la valeur particulière demandée (Uc2).

8. Procédé de simulation selon l'une quelconque des revendications précédentes, **caractérisé en ce qu'**il est utilisé pour la simulation d'une pédale d'accélérateur (2) de commande d'un moteur thermique.

9. Procédé de simulation selon la revendication 8, **caractérisé en ce qu'**il est utilisé pour simuler des valeurs particulières en position de pédale (2) pied levé.

## Patentansprüche

1. Simulationsverfahren eines Steuerhebels (2) eines Organs eines Fahrzeugs, insbesondere eines Kraftfahrzeugs, ab einem Standard-Steuerhebel, der mit einer Stromversorgung (4) verbunden ist, und beliebige elektrische Signale sendet, die von seinem Versenkungszustand abhängen, umfassend ein hohes Signal (U1) und ein anderes tiefes Signal (U2), wobei, um ab einer festgelegten Position des Standard-Steuerhebels einen ersten besonderen Wert des hohen Signals (U1) oder des tiefen Signals (U2) sowie einen zweiten besonderen Wert der Kohärenz zwischen diesen zwei Signalen (U1/U2) zu simulieren, die folgenden Schritte aufeinanderfolgend durchgeführt werden:
- in einem ersten Schritt Messen der Werte des hohen Signals (U1) und des tiefen Signals (U2),
- in einem zweiten Schritt Hinzufügen einer der drei folgenden Verbindungen Versorgung des Pedals (Ra), hohes Signal (R1) oder tiefes Signal (R2) eines ersten Widerstands in Reihe, um einen der zwei besonderen Werte zu erhalten, und
- in einem dritten Schritt, Messen des zweiten Werts, der sich daraus ergibt, und Regulieren eines zweiten Widerstands in Reihe auf einer der zwei verbliebenen Verbindungen, um den gewünschten zweiten besonderen Wert zu erhalten.

2. Simulationsverfahren nach Anspruch 1, **dadurch gekennzeichnet, dass**, um einen Wert des hohen Signals (U1) an der oberen Toleranzgrenze und eine Kohärenz (U1/U2) an der oberen Toleranzgrenze zu erhalten, zunächst im ersten Schritt überprüft wird, ob das tiefe Signal (Ui2) höher oder niedriger als sein besonderer Wert (Ub2) ist.

3. Simulationsverfahren nach Anspruch 2, **dadurch gekennzeichnet, dass** im zweiten Schritt, wenn das tiefe Signal (Ui2) höher als sein besonderer Wert ist, der Versorgung des Hebels ein Widerstand in Reihe (Ra) hinzugefügt wird, um dieses tiefe Signal auf den geforderten besonderen Wert (Ub2) abzusenken, und wenn das tiefe Signal (Ui2) niedriger als sein besonderer Wert ist, dem tiefen Signal ein Widerstand in Reihe (R2) hinzugefügt wird, um dieses tiefe Signal auf den geforderten besonderen Wert (Ub2) anzuheben.

4. Simulationsverfahren nach Anspruch 3, **dadurch gekennzeichnet, dass** im dritten Schritt dem hohen Signal (U1) ein Widerstand in Reihe (R1) hinzugefügt wird, um dieses hohe Signal auf den geforderten besonderen Wert (Uc1) anzuheben.

5. Simulationsverfahren nach Anspruch 1, **dadurch gekennzeichnet, dass**, um einen Wert des tiefen Signals (U2) an der oberen Toleranzgrenze und eine Kohärenz (U1/U2) an der unteren Toleranzgrenze zu erhalten, zunächst im ersten Schritt überprüft wird, ob das hohe Signal (Ui1) höher oder niedriger als sein besonderer Wert (Ub1) ist.

6. Simulationsverfahren nach Anspruch 5, **dadurch gekennzeichnet, dass** im zweiten Schritt, wenn das hohe Signal (Ui1) niedriger als sein besonderer Wert ist, dem hohen Signal ein Widerstand in Reihe (R1) hinzugefügt wird, um dieses hohe Signal auf den geforderten besonderen Wert (Ub1) anzuheben, und wenn das hohe Signal (Ui1) höher als sein besonderer Wert ist, der Versorgung des Hebels ein Widerstand in Reihe (Ra) hinzugefügt wird, um dieses hohe Signal auf den geforderten besonderen Wert (Ub1) abzusenken.

7. Simulationsverfahren nach Anspruch 6, **dadurch gekennzeichnet, dass** im dritten Schritt dem tiefen Signal (U2) ein Widerstand in Reihe (R2) hinzugefügt wird, um dieses tiefe Signal auf den geforderten besonderen Wert (Uc2) anzuheben.

8. Simulationsverfahren nach einem der vorangehenden Ansprüche, **dadurch gekennzeichnet, dass** es für die Simulation eines Gaspedals (2) zur Steuerung eines Verbrennungsmotors verwendet wird.

9. Simulationsverfahren nach Anspruch 8, **dadurch gekennzeichnet, dass** es für die Simulation der besonderen Werte in Pedalposition (2) angehobener Fuß verwendet wird.

## Claims

1. Method for simulating a control lever (2) of a member of a vehicle, in particular a motor vehicle, based on a standard control lever, connected to an electrical power supply (4), and emitting ordinary electrical signals depending on its degree of depression, comprising a high signal (U1) and another low signal (U2), wherein, in order to simulate, from a defined position of the standard control lever, a first specific value of the high signal (U1) or of the low signal (U2), as well as a second specific value of the coherence between these two signals (U1/U2), the following operations are performed successively:
- in a first step, the values of the high signal (U1) and of the low signal (U2) are measured;
- in a second step, a first series resistor is added on one of the following three connections: the pedal power supply (Ra), the high signal (R1) or the low signal (R2), to obtain one of the two specific values; and
- in a third step, the second resulting value is measured, and a second series resistor is adjusted on one of the two remaining connections to obtain the second specific value desired.

2. Simulation method according to claim 1, **characterised in that** in order to obtain a value of the high signal (U1) at the upper tolerance limit, and a coherence (U1/U2) at the upper tolerance limit, the first step firstly checks whether the low signal (Ui2) is greater than or less than its specific value (Ub2).

3. Simulation method according to claim 2, **characterised in that** in the second step, in the event that the low signal (Ui2) is greater than its specific value, a series resistor (Ra) is added on the power supply of the lever to reduce this low signal to the specific value requested (Ub2), and in the event that the low signal (Ui2) is less than its specific value, a series resistor (R2) is added on the low signal to increase this low signal to the specific value requested (Ub2).

4. Simulation method according to claim 3, **characterised in that** in the third step, a series resistor (R1) is added on the high signal (U1) to increase this high signal to the specific value requested (Uc1).

5. Simulation method according to claim 1, **characterised in that** in order to obtain a value of the low signal (U2) at the upper tolerance limit, and a coherence (U1/U2) at the lower tolerance limit, the first step firstly checks whether the high signal (Ui1) is greater than or less than its specific value (Ub1).

6. Simulation method according to claim 5, **characterised in that** in the second step, in the event that the high signal (Ui1) is less than its specific value, a series resistor (R1) is added on the high signal to increase this high signal to the specific value requested (Ub1), and in the event that the high signal (Ui1) is greater than its specific value, a series resistor (Ra) is added on the power supply of the lever to reduce this high signal to the specific value requested (Ub1).

7. Simulation method according to claim 6, **characterised in that** in the third step, a series resistor (R2) is added on the low signal (U2) to increase this low signal to the specific value requested (Uc2).

8. Simulation method according to any one of the previous claims, **characterised in that** it is used to simulate an accelerator pedal (2) controlling an internal combustion engine.

9. Simulation method according to claim 8, **characterised in that** it is used to simulate specific values in the position of the pedal (2) when the foot is lifted off.
